Europäisches Patentamt

European Patent Office

Office européen des brevets

(19)

(11) Veröffentlichungsnummer: **0 110 134**
**B1**

(12) **EUROPÄISCHE PATENTSCHRIFT**

(45) Veröffentlichungstag der Patentschrift:
**27.01.88**

(51) Int. Cl.⁴: **H 01 G 9/00**

(21) Anmeldenummer: **83110710.7**

(22) Anmeldetag: **26.10.83**

(54) **Festelektrolytkondensator.**

(30) Priorität: **29.10.82 DE 3240194**

(43) Veröffentlichungstag der Anmeldung:
**13.06.84 Patentblatt 84/24**

(45) Bekanntmachung des Hinweises auf die Patenterteilung:
**27.01.88 Patentblatt 88/4**

(84) Benannte Vertragsstaaten:
**DE FR GB IT**

(56) Entgegenhaltungen:
**DE - A - 2 531 438**
**DE - A - 2 638 611**
**GB - A - 1 447 982**
**US - A - 4 107 762**

(73) Patentinhaber: **Siemens Aktiengesellschaft Berlin und München, Wittelsbacherplatz 2, D-8000 München 2 (DE)**

(72) Erfinder: **Feilhauer, Rudolf, Dipl.-Ing. Dr.-Ing., Heidenheimerstrasse 22, D-8881 Zöschingen (DE)**

ACTORUM AG

Beschreibung

Die Erfindung betrifft einen Festelektrolytkondensator, bestehend aus einer Sinteranode aus einem Ventilmetall, einer darauf angeordneten, als Dielektrikum dienenden Oxidschicht, einem halbleitenden Elektrolyten als Kathode, einer Kathodenkontaktierung sowie einem Anoden- und Kathodenanschluss, bei dem zwischen dem Kathodenanschluss und der Kathodenkontaktierung ein Zwischenraum x vorhanden ist, der durch eine aus einer Metallegierung bestehenden Schmelzsicherung überbrückt ist, und der eine Umhüllung aus einem duroplastischen Kunststoff besitzt.

Ein derartiger Kondensator ist aus der DE-C3-25 31 438 bekannt. Als Ventilmetall wird bei derartigen Kondensatoren hauptsächlich Tantal verwendet, aus dem eine Sinteranode gefertigt wird. Auf dieser Anode wird durch einen Formierprozess eine als Dielektrikum dienende Oxidschicht erzeugt, als Kathode verwendet man hauptsächlich halbleitendes Mangandioxid. Auf der Mangandioxidschicht wird eine Kontaktierung angebracht, die aus einer Graphitschicht und einer darauf befindlichen Metallschicht, z.B. einer Kupfer- oder einer Silberleitlackschicht, besteht.

Derartige Kondensatoren sind gepolte Bauelemente, d.h. dass sie den Strom nur in einer Richtung sperren. Bei Falschpolung besteht die Gefahr, dass die angelegte Spannung kurzschlussartig entladen wird, wobei die Sinteranode verglühen und der Kondensator explosionsartig zerstört werden kann. Falls derartige Kondensatoren auf Leiterplatten angeordnet sind, kann dies für die benachbarten Bauelemente nachteilige Folgen haben, da sie durch die starke Erhitzung ebenfalls zerstört werden können. Es besteht weiterhin die Gefahr, dass die ganze Leiterplatte in Brand gerät und damit das mit der Leiterplatte bestückte Gerät zerstört wird.

Zur Behebung dieser Schwierigkeiten weist der eingangs geschilderte Kondensator zwischen dem Kathodenanschluss und der Kontaktierung einen Zwischenraum x auf, der durch eine Metallegierung überbrückt ist, die als Schmelzsicherung dient. Der Schmelzpunkt der Sicherung muss so gewählt werden, dass die Umhüllung aus dem duroplastischen Kunststoff nicht in Brand geraten kann. Vorzugsweise wird deshalb ein Lotmetall mit einem Schmelzpunkt niedriger als 200°C verwendet, z.B. Sn$_{60}$PbAg, das einen Schmelzpunkt im Temperaturbereich zwischen 180° und 190°C besitzt.

Im Störungsfall, beispielsweise bei einem Kurzschluss, wird durch die hohe Strombelastung zunächst der Sinterkörper erwärmt, wodurch sich die Schmelzsicherung ebenfalls erwärmt. Die Metallegierung wird flüssig und es tritt, bedingt durch den Abstand zwischen den Kontaktflächen, eine Unterbrechung zwischen Kathodenanschluss und Kathodenkontaktierung ein. Der Kondensator kann im Schadensfall also durch den Kurzschlussstrom nicht soweit erhitzt werden, dass er in Brand gerät und die übrigen Bauteile bzw. das Gerät beschädigt.

Die beschriebene Wirkungsweise setzt allerdings voraus, dass bei Erwärmung in der duroplastischem Umhüllung durch die Wärmeausdehnung feine Risse entstehen, die dem flüssigen Lot als Ausweichweg dienen und die zuverlässige Stromunterbrechung gewährleisten. Bis die Umhüllung allerdings aufplatzt, leitet das flüssige Lot weiterhin den Strom, so dass vorerst keine Unterbrechung stattfindet.

Wie Messungen ergeben haben, platzt die Umhüllung nämlich erst bei hohen Strömen in der Grössenordnung von 10 A und nach längeren Zeiten bis zu 2 Minuten. Ausserdem besteht die Gefahr, dass das ausfliessende Lotmetall auf den Leiterplatten weitere Kurzschlüsse verursacht.

Aufgabe der Erfindung ist es daher, einen Festelektrolytkondensator anzugeben, der bereits bei geringen Kurzschlussströmen zuverlässig abgeschaltet wird und bei dem nicht die Gefahr besteht, dass durch ausfliessendes Lotmetall Kurzschlüsse auf Leiterplatten auftreten können.

Diese Aufgabe wird beim eingangs angegebenen Kondensator erfindungsgemäss dadurch gelöst, dass die Schmelzsicherung von einer Schicht einer wachsartigen Substanz umgeben ist, die die Schmelzsicherung benetzt und deren Stärke so bemessen ist, dass im Kurzschlussfall die geschmolzene Metallegierung in dem flüssigen Wachs Schmelzperlen formen kann, ohne dass geschmolzenes Metall aus der Kunststoffumhüllung austreten muss, und dass die wachsartige Substanz eine Verflüssigungstemperatur unterhalb der Schmelztemperatur der Metallegierung besitzt.

Vorteilhafterweise besteht die wachsartige Substanz aus einem synthetischen Wachs, bevorzugt aus amorphem Polypropylen.

Der Vorteil des Kondensators gemäss der Erfindung besteht darin, dass die wachsartige Substanz bereits bei einer Erwärmung unterhalb der Schmelztemperatur der Metallegierung verflüssigt wird. Im Kurzschlussfall kann sich dann das geschmolzene Lot in dem flüssigen Wachs zu Schmelzperlen einformen, wodurch der Stromfluss unterbrochen wird, ohne dass Lotmetall aus der Kunststoffumhüllung austreten muss. Falls die Kunststoffumhüllung dennoch aufplatzen sollte bzw. durch unsachgemässe Behandlung feine Haarrisse aufweist, so tritt das Lotmetall in Form kleinster Tropfen und eingebettet in das Wachs aus der Umhüllung aus. Bei Erreichen der Oberfläche der Umhüllung erstarrt das Wachs rasch, so dass sekundäre Kurzschlüsse auch in diesem Fall verhindert werden. Das Polypropylen bildet beim Austritt Blasen, was bedeutet, dass das Polypropylen oder ein darin enthaltener Weichmacher beim Aufschmelzen überhitzt werden und durch den entstehenden Dampfdruck die Kunststoffumhüllung aufreissen. Tritt das Polypropylen aus bevor die Metallegierung geschmolzen ist, was beispielsweise auch durch in der Umhüllung vorhandene Haarrisse eintreten kann, wird dem später schmelzenden Lot zusätzlicher freier Raum zum Einformen der Schmelzperlen gegeben.

2

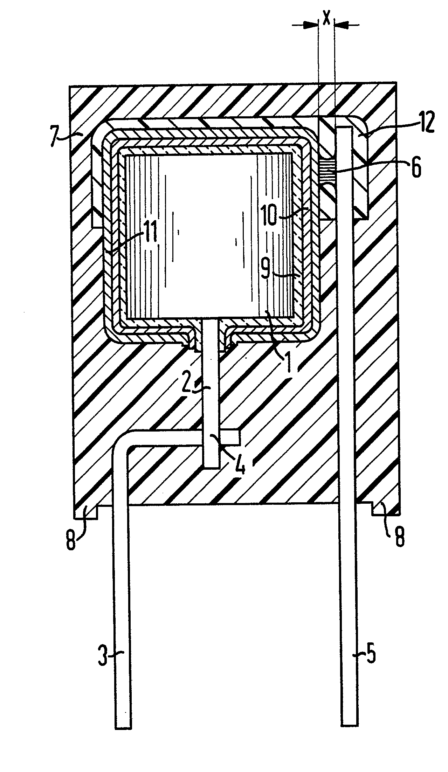

In der Figur ist ein Ausführungsbeispiel des erfindungsgemässen Kondensators dargestellt.

Die Sinteranode 1 aus einem Ventilmetall, z.B. Tantal, ist mit einem Anodenanschluss 2 kontaktiert, der ebenfalls aus Tantal besteht. Das äussere Anodenanschlusselement 3, das beispielsweise aus einem verzinnten Nickeldraht besteht, ist an der Stelle 4 an den Anodenanschluss 2 angeschweisst. In der Zeichnung ist ferner schematisch dargestellt, dass auf der Sinteranode 1 eine dielektrische Oxidschicht 9 angeordnet ist, auf der sich der halbleitende, als Kathode dienende Elektrolyt 10 befindet. Dieser Elektrolyt 10, der z.B. aus Mangandioxid besteht, ist mit der Kathodenkontaktierung 11 versehen, die aus einer Graphitschicht und einer darauf befindlichen Metallschicht besteht. Die Metallschicht kann dabei beispielsweise eine Kupfer- oder eine Silberleitlackschicht sein. Als Kathodenanschluss 5 dient ein verzinnter Nickeldraht. Zwischen dem Kathodenanschluss 5 und der Kathodenkontaktierung 11 ist ein Abstand x vorhanden, der mit der Schmelzsicherung 6 überbrückt wird. Der Abstand x hängt vom Durchmesser des verwendeten Sinterkörpers 1 ab und beträgt z.B. bei einer Sinteranode 1 mit einem Durchmesser von 4,5 mm vorzugsweise 0,5 mm. Wie bereits erwähnt, muss das Material, aus dem die metallische Schmelzsicherung 6 besteht, so gewählt werden, dass die Umhüllung 7, die aus einem duroplastischen Kunststoff – beispielsweise einem Epoxidharz – besteht, nicht in Brand geraten kann. Vorzugsweise wird deshalb ein Lotmetall mit einem Schmelzpunkt niedriger als 200 °C verwendet, z.B. $Sn_{60}PbAg$ gemäss DIN 1707, das aus 59,5–60,5% Sn, 3,0 bis 4,0% Ag sowie aus Pb besteht, und das einen Schmelzpunkt im Temperaturbereich zwischen 180 und 190 °C besitzt.

Bei dem in der Fig. dargestellten Ausführungsbeispiel befinden sich an der unteren Seite der Umhüllung Abstandsfüsse 8.

Die Schmelzsicherung 6 ist von einer dünnen Schicht einer wachsartigen Substanz 12, z.B. amorphen Polypropylens, umgeben. Zur Herstellung der Schicht 12 wird das Kondensatorelement vor der Herstellung der Umhüllung 7 so tief in geschmolzenes amorphes Polypropylen eingetaucht, dass die Schmelzsicherung 6 benetzt ist. Nach dem Erkalten des Polypropylens werden die Kondensatoren mit der Umhüllung 7 aus einem duroplastischen Kunststoff versehen.

Zur Überprüfung des Abschaltverhaltens wurden sowohl erfindungsgemässe Festelektrolytkondensatoren als auch Vergleichskondensatoren ohne die dünne Schicht in der Umgebung der Schmelzsicherung in Platinen eingelötet und in Falschpolrichtung (wodurch ein Kurzschluss erzeugt wird) mit steigendem Strom bei einem Stromanstieg von 4 A/min belastet. Bei den Kondensatoren gemäss der Erfindung sprach die Abschaltsicherung bereits bei Stromstärken unterhalb von 2 A (Abschaltstrom 1,72±0,12 A) hundertprozentig, also bei allen Kondensatoren, an, wogegen bei den Referenz-Kondensatoren gemäss dem Stand der Technik in 80% der Fälle ein Kurzschlussstrom von 5 A während einer Dauer von 10 Sekunden floss, ohne dass die Sicherung den Strom unterbrach.

Die erfindungsgemässen Kondensatoren zeichnen sich somit dadurch aus, dass selbst im Kurzschlussfall infolge einer Falschpolung eine schnelle und zuverlässige Abschaltung eintritt, ohne dass nachteilige Folgen hervorgerufen werden. Hervorzuheben ist dabei, dass bei allen erfindungsgemässen Kondensatoren Polypropylen durch die Umhüllung ausgetreten war, wobei nur in einem einzigen Fall eine geringe Menge Lötzinn ebenfalls mit austrat; hierbei waren aber die Lötzinntropfen in dem Polypropylen eingebettet. Ein Glühen der Sinterkörper bzw. ein Brand der Kunststoffumhüllungen trat bei keinem der erfindungsgemässen Kondendatoren auf.

**Patentansprüche**

1. Festelektrolytkondensator, bestehend aus einer Sinteranode (1) aus einem Ventilmetall, einer darauf angeordneten, als Dielektrikum dienenden Oxidschicht (9), einem halbleitenden Elektrolyten (10) als Kathode, einer Kathodenkontaktierung (11) sowie einem Anoden- (2) und Kathodenanschluss (5), bei dem zwischen dem Kathodenanschluss (5) und der Kathodenkontaktierung (11) ein Zwischenraum (x) vorhanden ist, der durch eine aus einer Metallegierung bestehenden Schmelzsicherung überbrückt ist, und der eine Umhüllung (7) aus einem duroplastischen Kunststoff besitzt, dadurch gekennzeichnet, dass die Schmelzsicherung (6) von einer Schicht aus einer wachsartigen Substanz (12) umgeben ist, die die Schmelzsicherung benetzt und deren Stärke so bemessen ist, dass im Kurzschlussfall die geschmolzene Metallegierung in dem flüssigen Wachs Schmelzperlen formen kann, ohne dass geschmolzenes Metall aus der Kunststoffumhüllung (7) austreten muss, und dass die wachsartige Substanz (12) eine Verflüssigungstemperatur unterhalb der Schmelztemperatur der Metallegierung (6) besitzt.

2. Festelektrolytkondensator nach Anspruch 1, dadurch gekennzeichnet, dass die wachsartige Substanz (12) aus einem synthetischen Wachs besteht.

3. Festelektrolytkondensator nach Anspruch 2, dadurch gekennzeichnet, dass das synthetische Wachs aus amorphem Polypropylen besteht.

**Claims**

1. A solid electrolyte capacitor consisting of a sintered anode (1) made of a metal exhibiting the valve effect, an oxide layer (9) which is arranged on the anode and serves as dielectric, a semiconducting electrolyte (10) which serves as cathode, a cathode contact (11) and an anode terminal (2) and a cathode terminal (5), where between the cathode terminal (5) and the cathode contact (11) an interspace (x) is provided which is bridged by a fuse made of a metal alloy and which capacitor has a casing (7) made of a thermosetting synthetic resin material, characterised in that the fuse (6) is surrounded by a layer of a wax-like substance (12) which wets the fuse and whose thickness is such that in the event of a short-circuit, the molten metal alloy in the liquid wax is able to form molten beads without the necessity for molten metal to escape from the synthetic resin casing (7); and that the wax-like substance (12) has a melting point below the melting point of the metal alloy (6).

2. A solid electrolyte capacitor as claimed in Claim 1, characterised in that the wax-like substance (12) consists of a synthetic wax.

3. A solid electrolyte capacitor as claimed in Claim 2, characterised in that the synthetic wax consists of amorphous polypropylene.

**Revendications**

1. Condensateur à électrolyte solide, constitué d'une anode frittée (1), d'un métal à effet de soupape, d'une couche d'oxyde (9) disposée sur cette anode et servant de diélectrique, d'un électrolyte semi-conducteur (10) comme cathode, d'un dispositif (11) de mise en contact de la cathode, ainsi que d'une connexion d'anode (2) et d'une connexion de cathode (5), dans lequel un intervalle (x) existe entre la connexion de cathode (5) et le dispositif (11) de mise en contact de la cathode, intervalle au travers duquel s'étend un fusible formé d'un alliage métallique, le condensateur possédant un enrobage (7) en matière synthétique thermodurcissable, caractérisé en ce que le fusible (6) est entouré par une couche formée d'une substance (12) ressemblant à la cire, qui mouille le fusible et dont l'épaisseur est choisie pour que, en cas de court-circuit, l'alliage métallique fondu puisse former des perles de matière fondue dans la cire liquide, sans que du métal fondu doive sortir de l'enrobage de matière synthétique, et que la substance (12) ressemblant à la cire possède une température de fluidification inférieure au point de fusion de l'alliage métallique (6).

2. Condensateur selon la revendication 1, caractérisé en ce que la substance (12) ressemblant à la cire est une cire synthétique.

3. Condensateur selon la revendication 2, caractérisé en ce que la cire synthétique est du polypropylène amorphe.